(19) Europäisches Patentamt / European Patent Office / Office européen des brevets

(11) **EP 1 224 448 B1**

(12) **FASCICULE DE BREVET EUROPEEN**

(45) Date de publication et mention
de la délivrance du brevet:
**23.01.2008 Bulletin 2008/04**

(21) Numéro de dépôt: **01965331.0**

(22) Date de dépôt: **17.08.2001**

(51) Int Cl.:
*G01M 11/02* (2006.01)     *G01B 11/255* (2006.01)

(86) Numéro de dépôt international:
**PCT/FR2001/002626**

(87) Numéro de publication internationale:
**WO 2002/016902 (28.02.2002 Gazette 2002/09)**

(54) **PROCEDE ET APPAREIL DE MESURE EN TRANSMISSION DE LA STRUCTURE GEOMETRIQUE D'UN COMPOSANT OPTIQUE**

VERFAHREN UND APPARAT ZUR MESSUNG DER GEOMETRISCHEN STRUKTUR EINES OPTISCHEN BAUTEILS DURCH LICHTÜBERTRAGUNG

METHOD AND APPARATUS FOR TRANSMISSION MEASUREMENT OF THE GEOMETRIC STRUCTURE OF AN OPTICAL COMPONENT

(84) Etats contractants désignés:
**AT BE CH CY DE DK ES FI FR GB GR IE IT LI LU MC NL PT SE TR**

(30) Priorité: **22.08.2000 FR 0010794**

(43) Date de publication de la demande:
**24.07.2002 Bulletin 2002/30**

(73) Titulaire: **ESSILOR INTERNATIONAL COMPAGNIE GENERALE D'OPTIQUE**
**94227 Charenton cédex (FR)**

(72) Inventeurs:
• **DEVIE, Pierre**
  **F-94310 Orly (FR)**
• **BELL, Francis**
  **F-92500 Rueil-Malmaison (FR)**
• **LE SAUX, Gilles**
  **F-75010 Paris (FR)**

(74) Mandataire: **Hirsch & Associés**
**58, avenue Marceau**
**75008 Paris (FR)**

(56) Documents cités:
**WO-A-99/64817**

• **PATENT ABSTRACTS OF JAPAN vol. 014, no. 004 (P-986), 9 janvier 1990 (1990-01-09) & JP 01 257229 A (TOPCON CORP), 13 octobre 1989 (1989-10-13)**

**Description**

La présente invention a pour objet un procédé et un appareil de mesure de la structure géométrique ou optique d'un composant optique.

Le procédé selon l'invention permet de mesurer de façon absolue une ou plusieurs surfaces polies ou la répartition d'indice d'un composant optique. On entend par mesure absolue une mesure qui ne nécessite aucune connaissance préalable du composant. La mesure de surfaces polies et/ou de répartitions d'indice est susceptible de nombreuses applications industrielles. Elle est notamment utile dans le domaine ophtalmique pour le contrôle ou la mesure de lentilles ophtalmiques; dans ce cas, la réalisation de surfaces complexes nécessite la détermination simultanée de centaines de coefficients.

FR-A-2 710 162 ou EP-A-0 644 411 au nom de la demanderesse décrivent un appareil de déflectométrie en réflexion ou en transmission. Cet appareil permet la mesure par réflexion ou transmission de la structure géométrique d'un composant optique. Le principe d'un tel appareil de mesure est d'éclairer le composant optique à mesurer par un rayonnement de surface d'onde connue - dans le cas le plus simple une onde plane - et de mesurer le front d'onde après réflexion ou transmission sur le composant optique à mesurer. La mesure de la surface d'onde après réflexion ou transmission permet de remonter aux caractéristiques géométriques du composant à mesurer.

WO-A-9705467 décrit un appareil du même genre. Ce document propose d'étalonner l'appareil en mesure l'aberration transverse d'un rayon de référence après réflexion ou transmission par le composant à mesurer.

Les appareils décrits dans ces documents ne fonctionnent en fait que pour une seule surface d'un composant optique. Pour un fonctionnement en réflexion, les appareils permettent de déterminer la structure géométrique de la surface sur laquelle se réfléchit la lumière de surface d'onde connue. Pour un fonctionnement en transmission, les appareils permettent de déterminer la structure géométrique d'une des surfaces du composant optique, si l'autre surface et l'indice du composant sont connus. Alternativement, en transmission, on peut déterminer la répartition d'indice du composant, si les deux surfaces du composant sont connues. Par ailleurs, d'un point de vue pratique, il est rare de pouvoir mesurer toutes les caractéristiques d'un composant optique sans modifier le banc de mesure.

Il est possible à l'aide de ces appareils de mesurer successivement en réflexion les deux surfaces d'un composant optique, pour en déduire le composant optique; ce procédé présente les inconvénients suivants. D'une part, si une surface est munie d'un revêtement anti-reflet, ce revêtement gêne la mesure ; de tels revêtements sont souvent prévus sur des lentilles ophtalmiques. D'autre part, la mesure en réflexion peut nécessiter de dépolir la face arrière du composant pour éviter les images parasites ; enfin, même si l'on arrive à mesurer séparément les deux surfaces, il faut pour retrouver le composant connaître la position relative des surfaces, autrement dit connaître l'épaisseur du composant ou le prisme en au moins un point : ce positionnement relatif ajoute une source d'erreurs.

US-A-5 825 476 propose un appareil de cartographie d'un composant optique. Ce document propose d'éclairer un composant optique par une lumière présentant un front d'onde connu, puis de recueillir sur un réseau de micro-lentilles la lumière transmise à travers le composant ou réfléchie par celui-ci. Les micro-lentilles projettent la lumière transmise ou réfléchie sur un écran dépoli; l'image de l'écran dépoli est enregistrée par une caméra et est analysée pour déterminer la structure du composant optique, par comparaison avec une image de référence. Le résultat obtenu en transmission est une carte de puissance du composant et en réflexion, une carte d'altitude du composant.

Dans un des modes de réalisation, ce document propose de procéder à deux mesures, en deux positions de l'écran dépoli, mais sans modifications dans le système autre que la position de l'écran dépoli. Ces deux mesures permettent pour chaque micro-lentille, de déterminer le rayon après transmission, par la connaissance de deux points pour deux positions de l'écran dépoli. Le point d'entrée est connu avant la mesure, car il correspond à une micro-lentille de la matrice placée en entrée. Connaissant une des surface du composant, il est alors possible de déterminer la deuxième surface du composant.

Ce document, comme les trois document précédents, ne permet donc que de déterminer la géométrie d'une surface du composant. La géométrie de l'autre surface du composant est supposée connue pour les calculs.

Il existe donc un besoin d'un appareil de mesure de verres, qui permette de déterminer les différentes caractéristiques d'un composant optique, et notamment des deux surfaces de ce composant optique. Un tel appareil permet notamment de mesurer efficacement des verres progressifs, en déterminant de façon exacte la forme de chacune de leurs deux surfaces, sans avoir à formuler d'hypothèse sur l'une de ces surfaces.

L'invention propose en conséquence un procédé de mesure en transmission de la structure géométrique d'un composant optique, comprenant les étapes :

- d'éclairage du composant optique par une première lumière incidente, dont le front d'onde est connu,
- de mesure du front d'onde de ladite première lumière après transmission par ledit composant optique,
- d'éclairage du composant optique par une deuxième lumière incidente, dont le front d'onde est connu,
- de mesure du front d'onde de ladite deuxième lumière après transmission par ledit composant optique, et
- de calcul de la structure géométrique dudit composant optique à partir des fronts d'ondes mesurés lors desdites étapes de mesure.

Dans un mode de réalisation de l'invention, aux différentes étapes de mesure, les fronts d'onde du côté de la même surface du composant sont différents.

On peut avantageusement utiliser pour l'étape de mesure une déflectométrie de Hartmann ou Shack-Hartmann, ou une déflectométrie à franges, ou encore une mesure par interférométrie.

De préférence, les étapes d'éclairage comprennent l'éclairage du composant sur une de ses surfaces, et l'éclairage du composant sur l'autre de ses surfaces. Dans ce cas, les première et seconde lumières peuvent présenter des fronts d'onde identiques. On peut notamment prévoir que les étapes d'éclairages comprennent l'éclairage du composant optique par une même lumière incidente, le procédé comprenant alors une étape de retournement du composant optique.

Dans un autre mode de réalisation, les étapes d'éclairage comprennent l'éclairage du composant sur une seule de ses surfaces. Dans ce cas, les première et seconde lumières peuvent présenter des fronts d'onde distincts.

Il est possible que l'étape de calcul s'effectue par optimisation d'une fonction de mérite calculée à partir d'au moins deux étapes de mesure. On peut aussi prévoir une étape de mesure de l'épaisseur du composant en au moins un point.

Dans un mode de réalisation, le procédé comprend encore des étapes :

- d'éclairage du composant optique par une troisième lumière incidente, dont le front d'onde est connu, et
- de mesure du front d'onde de ladite troisième lumière après transmission par ledit composant optique.

L'invention propose aussi un appareil de mesure en transmission de la structure géométrique d'un composant optique, comprenant :

- des moyens d'éclairage du composant optique par une première lumière incidente, dont le front d'onde est connu,
- des moyens de mesure du front d'onde de ladite première lumière après transmission par ledit composant optique,
- des moyens d'éclairage du composant optique par une deuxième lumière incidente, dont le front d'onde est connu, et distinct ;
- des moyens de mesure du front d'onde de ladite deuxième lumière après transmission par ledit composant optique,
- des moyens de calcul de la structure géométrique dudit composant optique à partir des fronts d'ondes mesurés lors desdites étapes de mesure.

Dans un mode de réalisation, les moyens de mesure comprennent une matrice de micro-lentilles. Ils peuvent aussi comprendre un réseau.

Avantageusement, les moyens d'éclairage du composant optique par une première lumière incidente, et les moyens d'éclairage du composant optique par une deuxième lumière incidente éclairent respectivement le composant sur chacune de ses surfaces. Dans ce cas, les première et seconde lumières peuvent présenter des fronts d'onde identiques.

Dans un autre mode de réalisation, les moyens d'éclairage du composant optique par une première lumière incidente et les moyens d'éclairage du composant optique par une deuxième lumière incidente éclairent la même surface du composant. Dans ce cas, les première et seconde lumières peuvent présenter des fronts d'onde distincts.

L'appareil peut encore comprendre des moyens de mesure de l'épaisseur du composant.

Dans un mode de réalisation, l'appareil comprend :

- des moyens d'éclairage du composant optique par une troisième lumière incidente, dont le front d'onde est connu,
- des moyens de mesure du front d'onde de ladite troisième lumière après transmission par ledit composant optique.

On peut encore prévoir des moyens de visualisation de micro-gravures sur le composant.

D'autres caractéristiques et avantages de l'invention apparaîtront à la lecture de la description détaillée qui suit des modes de réalisation de l'invention, donnés à titre d'exemple uniquement et en référence aux dessins qui montrent :

- figures 1 à 5, des représentations schématiques de différents modes de réalisation d'un appareil pour la mise en oeuvre de l'invention ;
- figure 6, une représentation schématique du calcul d'une fonction de mérite ;
- figure 7, une représentation similaire à celle de la figure 6, dans le cas d'un front d'onde incident plan ;
- figures 8 à 13, des caractéristiques d'une lentille obtenues par mesure mécanique de la lentille ;
- figures 14 à 16, les caractéristiques de la lentille des figures 8 à 13, obtenues par reconstruction selon l'état de la technique ;

- figures 17 à 22, les caractéristiques de la lentille des figures 8 à 13, obtenues par le procédé de l'invention.

L'invention repose comme dans les appareils de la demanderesse décrits dans FR-A-2 710 162 ou WO-A-9705467, sur l'analyse des fronts d'onde - ou des rayons qui leur sont perpendiculaires - après et avant transmission par le composant à mesurer. On peut pour mesurer le front d'onde de la lumière après transmission par le composant utiliser comme dans ces documents une méthode de déflectométrie à franges, ou encore une méthode de déflectométrie dite de Hartmann ou Shack-Hartmann. On peut aussi mesurer le front d'onde de la lumière transmise par des méthodes interférométriques, et par exemples par interférométrie de Mach-Zender, ou par interférométrie suivant la méthode appelée "lateral shearing interferometry".

L'invention propose de procéder à deux mesures en transmission dans deux configurations optiques distinctes, et d'en déduire sans hypothèses préalables les deux surfaces du composant ainsi que leur position relative. Une solution possible consiste à minimiser ou maximiser une fonction de mérite en prenant comme variables l'ensemble de coefficients représentatifs de la géométrie du verre de telle sorte que, lorsque la fonction de mérite est minimale - ou maximale - les valeurs prises par les variables correspondent aux valeurs de chacun des coefficients qui définissent les caractéristiques géométriques du composant. Les configurations optiques sont distinctes, dans la mesure où la traversée du composant s'effectue par des chemins optiques différents.

L'invention peut notamment s'appliquer à la mesure de lentilles finies. Par rapport à l'état de la technique, elle évite de supposer connue une des surfaces de la lentilles. Elle est plus précise et plus simple à mettre en oeuvre que deux mesures en réflexion sur les deux faces du composant :

- l'invention peut être mise en oeuvre même si les surfaces du composant sont revêtues d'un traitement anti-reflet ;
- l'invention est mise en oeuvre sans dépolir la surface arrière du composant à mesurer pour éviter les images parasites ;
- l'invention évite les problèmes de positionnement relatif des deux surfaces mesurées séparément par réflexion.

On décrit dans la suite un mode de réalisation de l'invention, dans lequel les surfaces d'ondes sont déterminées par déflectométrie dite Hartmann ou de Shack Hartmann; le principe de cette déflectométrie est décrit dans US-A-5 825 476. Comme expliqué dans ce document, le composant optique à mesurer est éclairé par une lumière présentant un front d'onde connu. La lumière transmise par le composant optique est appliquée sur un réseau de micro-lentilles, qui forment des images dans un plan matérialisé par un écran dépoli ou par une matrice de capteurs à couplage de charges (CCD). La position du point image de chaque micro-lentille, dépend du front d'onde appliqué sur la micro-lentille. L'insertion d'un composant optique dans le système induit une variation du front d'onde incident sur les micro-lentilles, et donc une variation de la position du point image de chaque micro-lentille; l'analyse du déplacement du point image de chaque micro-lentille permet de mesurer la variation du front d'onde provoquée par l'insertion du composant optique dans le système.

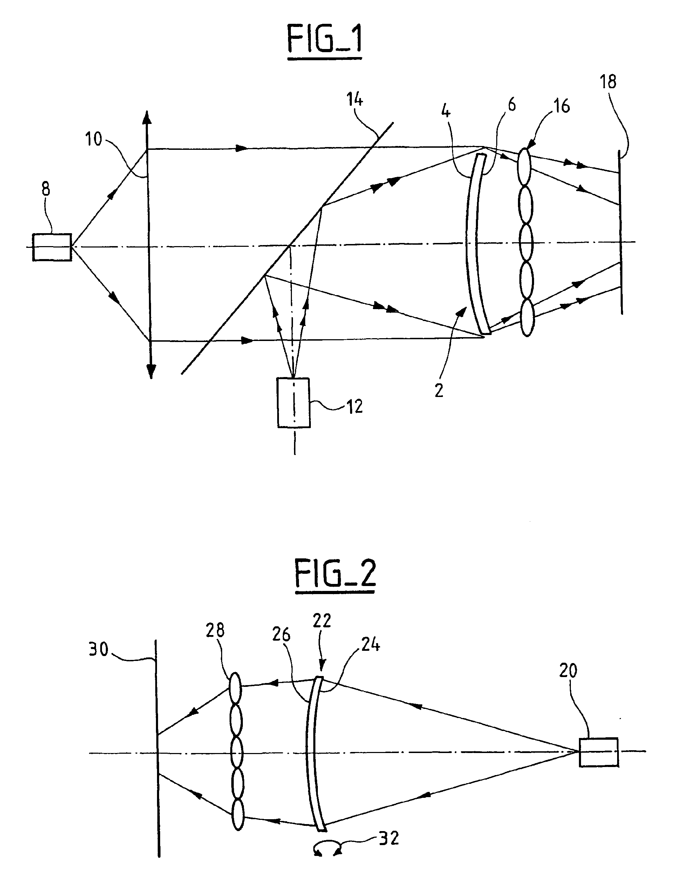

La figure 1 montre une représentation schématique d'un premier mode de réalisation d'un appareil pour la mise en oeuvre de l'invention; dans le mode de réalisation de la figure 1, on utilise pour les deux mesures en transmission suivant deux configurations distinctes deux lumières incidentes différentes, et plus précisément une lumière ayant un front d'onde plan et une lumière ayant un front d'onde sphérique.

L'appareil de la figure 1 présente donc un support (non-représenté) pour recevoir un composant optique 2, qui présente une surface arrière 4 et une surface avant 6; les termes "avant" et "arrière" sont uniquement utilisés ici pour identifier les surfaces, et ne correspondent pas nécessairement à l'utilisation ultérieure du composant; autrement dit, on peut disposer le composant "à l'envers" dans l'appareil.

L'appareil présente en outre une source de lumière présentant un front d'onde plan. On peut utiliser comme dans WO-A-9705467 une source ponctuelle 8 et une lentille 10, qui génèrent une lumière incidente sur la surface arrière 4 du composant à mesurer avec un front d'onde plan. L'appareil présente aussi une source de lumière présentant un front d'onde sphérique. On peut utiliser une deuxième source ponctuelle 12, qui génère une lumière incidente sur la surface arrière du composant avec un front d'onde sphérique. On utilise une lame semi-réfléchissante 14 pour éclairer la surface arrière 4 du composant avec les lumières provenant des sources 8 et 12 : la lumière provenant de la source 8 et de la lentille 10 traverse la lame semi-réfléchissante 14, tandis que la lumière provenant de la source 12 est réfléchie par la lame 14. On pourrait aussi utiliser une source commune pour les deux lumières, par exemple en prévoyant que la lentille 10 de collimation est escamotable. Il est donc possible dans l'appareil de l'invention d'éclairer la surface arrière 4 composant successivement avec deux lumières présentant chacune un front d'onde connu.

L'appareil peut encore présenter des moyens pour mesurer en un point l'épaisseur du composant. Il est possible de prévoir par exemple une mesure en réflexion du composant sur l'axe du dispositif, de part et d'autre du composant. Une telle mesure permet de déterminer la normale des surfaces du composant à l'intersection avec l'axe de l'appareil, ainsi que l'épaisseur du composant sur cet axe. Pour ces mesures, on peut utiliser du côté de la surface arrière comme du côté de la surface avant les moyens décrits dans FR-A-2 710 162 ou WO-A-9705467, qui ne sont pas décrits à nouveau ici.

Une telle mesure de l'épaisseur n'est pas indispensable à la mise en oeuvre de l'invention; la mesure d'épaisseur permet d'accélérer la détermination des caractéristiques du composant. Il reste possible de ne pas mesurer l'épaisseur du composant, et de déterminer celle-ci lors de la recherche par optimisation qui est décrite plus bas.

L'appareil présente ensuite des moyens de détermination du front d'onde de la lumière transmise par le composant. Dans le mode de réalisation de la figure, comme indiqué plus haut, on peut utiliser une déflectométrie de Hartmann, ou une déflectométrie de Shack-Hartmann lorsque l'on utilise des micro-lentilles; l'appareil présente donc un réseau de micro-lentilles 16, et un plan d'analyse 18, sur lequel les micro-lentilles forment une image. Ce plan d'analyse pourra être constitué soit par un dépoli, soit directement par une CCD. Comme expliqué plus haut, l'analyse de l'image formée sur le plan d'analyse permet de déterminer le front d'onde de la lumière transmise à travers le composant.

Des dimensions typiques de l'appareil de la figure 1 sont les suivantes : la lentille 10 est située sur l'axe principal passant par le composant 2 à mesurer et la matrice 16 de micro-lentilles; elle présente un diamètre de 100 mm et une focale comprise entre 110 et 250 mm. La lame 14 séparatrice présente un diamètre de 150 mm. La distance entre la seconde source 12 (située sur un axe perpendiculaire à l'axe principal) et le point intersection entre la 14 et l'axe principal est de l'ordre de 70 mm. La distance entre ce même point et la surface du composant optique 2 est aussi de l'ordre de 70 mm. La distance entre le composant 2 et le Shack-Hartmann peut aussi être comprise entre 0 et 30 mm. Les sources 8 et 12 peuvent être des diodes laser ou des LED.

L'appareil de la figure 1 permet donc une mesure de front d'onde de deux lumières transmises par le composant. En d'autres termes, l'appareil permet de mesurer dans deux configurations distinctes la transmission d'une lumière incidente de front d'onde connu à travers le composant à mesurer. L'appareil peut le cas échéant permettre aussi une mesure de l'épaisseur du composant en un point. Sur la figure 1, le composant est centré sur l'axe optique de l'appareil; comme expliqué plus bas, il n'est pas nécessaire dans le procédé de l'invention que le composant soit précisément centré sur l'axe optique de l'appareil, et un positionnement grossier suffit.

La figure 2 montre une représentation schématique d'un deuxième mode de réalisation d'un appareil pour la mise en oeuvre de l'invention. Dans le mode de réalisation de la figure 2, on utilise pour les deux mesures en transmission suivant deux configurations distinctes une seule source lumineuse, mais on retourne le composant pour l'éclairer sur ses deux surfaces. L'appareil présente donc une source lumineuse 20 générant une lumière de front d'onde connu - dans l'exemple de la figure une lumière de front d'onde sphérique. La lumière arrive sur un composant 22 monté sur un support non représenté; le composant présente une surface arrière 24 et une surface avant 26. L'appareil présente ensuite des moyens de détermination du front d'onde de la lumière transmise par le composant; comme dans le mode de réalisation de la figure 1, on utilise un réseau de micro-lentilles 28, et un plan d'analyse 30.

L'appareil de la figure 2 permet des mesures du front d'onde de la lumière transmise par le composant suivant des configurations différentes, comme expliqué maintenant. On commence par monter le composant optique dans le support, comme représenté sur la figure; la lumière provenant de la source 20 éclaire le composant sur la surface arrière 24 et le front d'onde de la lumière transmise est déterminé par le réseau 28 et le plan 30. On retourne ensuite le composant optique 22, par rotation du support, comme symbolisé par la flèche 32 sur la figure 2. La lumière provenant de la source 20 éclaire alors le composant sur la surface avant 26 et le front d'onde de la lumière transmise est déterminé par le réseau 28 et le plan 30.

Autrement dit, la première configuration correspond à un éclairage du composant sur sa surface arrière 24 par la lumière connue émise par la source 20. La deuxième configuration correspond à un éclairage du composant sur sa surface avant 26 par la lumière connue émise par la source 20. L'important dans l'appareil de la figure 2 est de pouvoir ramener dans un même repère lié au composant les deux configurations; une solution à cet effet consiste à connaître précisément la nature du retournement; on peut pour cela utiliser simplement un support assurant un retournement connu du composant optique.

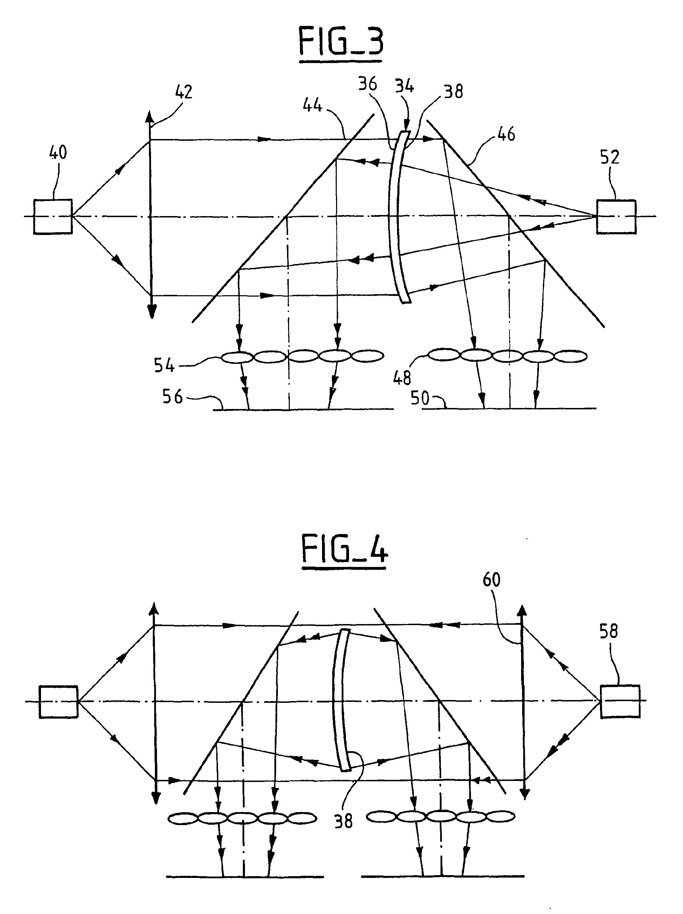

La figure 3 montre une représentation schématique d'un troisième mode de réalisation d'un appareil pour la mise en oeuvre de l'invention. Dans le mode de réalisation de la figure 3, on utilise pour les deux mesures en transmission suivant deux configurations distinctes des sources lumineuses distinctes, qui éclairent le composant sur ses deux surfaces.

L'appareil de la figure 3 présente donc un support (non-représenté) pour recevoir un composant optique 34, qui présente une surface arrière 36 et une surface avant 38. L'appareil présente en outre une source de lumière présentant un front d'onde plan; cette source de lumière est constituée une source ponctuelle 40 et une lentille 42, qui génèrent à travers une lame semi-réfléchissante 44 une lumière incidente sur la surface arrière 36 du composant à mesurer avec un front d'onde plan. La lumière transmise par le composant est réfléchie par une seconde lame semi-réfléchissante 46 vers un réseau de micro-lentilles 48 et un plan de CCD 50.

L'appareil présente aussi une source de lumière présentant un front d'onde sphérique, qui éclaire le composant sur la surface avant. On utilise une deuxième source ponctuelle 52, qui génère à travers la lame semi-réfléchissante 46 une lumière incidente sur la surface avant 38 du composant 34 avec un front d'onde sphérique. La lumière provenant de la source 52 et transmise par le composant optique est réfléchie par la lame semi-réfléchissante 44 vers un second réseau de micro-lentilles 54 et un second plan de CCD 56.

L'appareil permet manifestement une mesure de la lumière transmise par le composant suivant deux configurations. Dans la première configuration le composant est éclairé sur sa surface 36 qualifiée d'arrière par une lumière présentant un front d'onde plan; dans la deuxième configuration, le composant est éclairé sur sa surface 38 qualifiée d'avant par une lumière présentant un front d'onde sphérique. On pourrait bien sûr modifier le dispositif pour n'utiliser qu'un seul jeu de moyens de mesure du front d'onde transmis, par exemple à l'aide de miroirs et de lames semi-réfléchissantes supplémentaires.

La figure 4 montre une représentation schématique d'un quatrième mode de réalisation d'un appareil pour la mise en oeuvre de l'invention. L'appareil de la figure 4 diffère de celui de la figure 3 uniquement en ce que l'on utilise dans la deuxième configuration une lumière présentant un front d'onde plan; la source ponctuelle 52 de la figure 3 est donc remplacée sur la figure 4 par une source ponctuelle 58 et une lentille 60, qui éclairent la surface avant 38 du composant avec une lumière présentant un front d'onde plan.

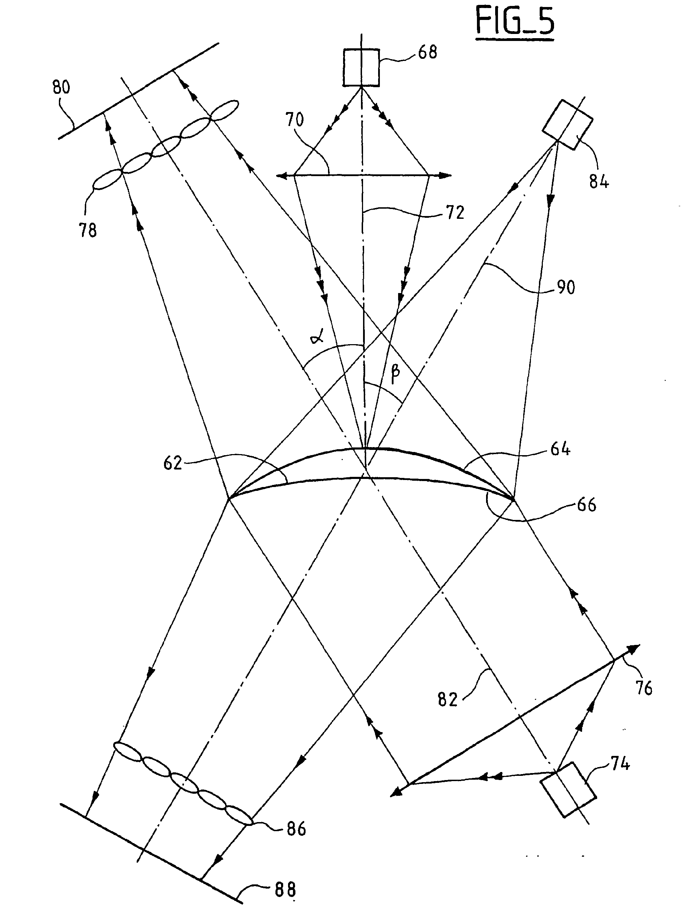

La figure 5 montre une représentation schématique d'un cinquième mode de réalisation d'un appareil pour la mise en oeuvre de l'invention. L'appareil de la figure 5 présente l'avantage de permettre d'afficher non seulement des données relatives à la structure du composant optique à mesurer, mais aussi les gravures sur ce composant. Dans le cas d'une lentille ophtalmique, ces gravures sont importantes pour l'opticien : en effet, elles sont prises comme référence lors de l'opération de détourage, qui permet d'adapter la lentille à la forme de monture choisie par le porteur. L'appareil de la figure 5 présente donc des moyens d'éclairage et de mesure suivant deux configurations différentes. Une caméra CCD dont la mise au point est faite sur la surface de la lentille permet de visualiser les gravures.

L'appareil présente donc un support (non-représenté) pour recevoir un composant optique 62, qui présente une surface arrière 64 et une surface avant 66. Une caméra CCD 68 est focalisée à l'aide d'une lentille 70 sur la surface du composant. L'axe 72 de la caméra et de la lentille est sensiblement confondu avec l'axe optique du composant.

L'appareil présente en outre une source de lumière présentant un front d'onde plan; cette source de lumière est constituée une source ponctuelle 74 et une lentille 76, qui génèrent une lumière incidente sur la surface avant 66 du composant à mesurer avec un front d'onde plan. La lumière de front d'onde plan est transmise par le composant à un réseau de micro-lentilles 78 et un plan de CCD 80. La lumière de front d'onde plan est en incidence oblique sur le composant à mesure, pour permettre de visualiser les gravures du composant; plus spécifiquement, l'angle $\alpha$ entre l'axe 82 de la voie de mesure et l'axe 72 de la voie de visualisation des micro-gravures est supérieur à 10˚.

L'appareil présente aussi une source de lumière présentant un front d'onde sphérique, qui éclaire le composant sur la surface arrière. On utilise une deuxième source ponctuelle 84, qui génère une lumière incidente sur la surface arrière 64 du composant avec un front d'onde sphérique. La lumière provenant de la source 84 est transmise par le composant optique vers un second réseau de micro-lentilles 86 et un second plan de CCD 88. La lumière de front d'onde sphérique est aussi en incidence oblique sur le composant à mesure, pour permettre de visualiser les gravures du composant; plus spécifiquement, l'angle $\beta$ entre l'axe 90 de la voie de mesure et l'axe 72 de la voie de visualisation des micro-gravures est supérieur à 10˚.

L'appareil de la figure 5 permet une mesure de la lumière transmise par le composant suivant deux configurations similaire à celles de la figure 3, à l'angle d'incidence près. Il permet en outre de visualiser les micro-gravures des lentilles, et donc de fournir une mesure du composant dans un repère lié aux micro-gravures.

Il est encore entendu que l'on aurait pu utiliser dans l'appareil de la figure 5 des sources assurant un éclairage avec des lumières de front d'onde identiques, ou encore des sources assurant un éclairage d'une même surface du composant optique. Dans tous les cas, on peut prévoir comme décrit en référence à la figure 1 des moyens pour mesurer en un point l'épaisseur du composant.

Pour tous les appareils décrits, on peut grâce à l'optimisation décrite dans la suite retrouver les surfaces et l'épaisseur indépendamment de la position du composant optique dans le référentiel du montage. Pour pouvoir ensuite associer les surfaces au composant optique, il peut être intéressant comme expliqué à la figure 5 de déterminer la position d'un point du composant optique dans le référentiel. Outre la solution proposée à la figure 5, on peut de ce fait prévoir dans l'appareil des moyens de mesure de la position d'un point sur une des surfaces du composant optique. Par exemple, on peut utiliser l'autocollimation d'un laser ou d'autres moyens connus en soi pour mesurer la position d'un point du composant optique dans le référentiel de l'appareil; on pourrait aussi mesurer l'angle que fait la surface du composant optique avec l'axe optique de l'appareil. Cette solution permet d'une façon ou d'une autre d'associer la surface du composant déterminée grâce à l'invention et le composant optique lui-même.

A partir de ces mesures de fronts d'onde en transmission dans deux configurations, l'invention propose de déterminer la structure du composant. Elle propose à cet effet d'utiliser une recherche par optimisation des deux surfaces du composant, à l'aide d'une fonction de mérite représentative des deux fronts d'ondes transmis dans les deux configurations différentes. La définition de la fonction de mérite est indépendante des deux surfaces, et permet en tout état de cause de retrouver ces deux surfaces. A l'inverse des solutions de l'état de la technique, l'invention repose sur la constatation que l'exploitation simultanée des deux mesures permet de déterminer les deux surfaces du composant.

Si l'épaisseur du composant n'est pas mesurée, elle peut aussi être déterminée lors de la recherche par optimisation. Dans ce cas, il s'avère que la fonction de mérite peut présenter des minima locaux pour certaines valeurs de l'épaisseur, mais présente toujours un minimum absolu pour l'épaisseur réelle du composant. Si l'on connaît l'épaisseur, on peut se contenter de rechercher le minimum pour cette valeur de l'épaisseur. Dans certains cas, une optimisation locale ne permet pas de retrouver l'épaisseur du composant; à ce moment, une optimisation globale permet de retrouver l'extremum, et donc l'épaisseur du composant.

Le principe d'une recherche par optimisation est connu en soi. On définit des valeurs de départ pour les surfaces avant et arrière du composant optique. On définit une fonction de mérite, susceptible d'être calculée pour des valeurs courantes des surfaces avant et arrière du composant; cette fonction de mérite est conçue pour présenter une valeur minimale ou maximale lorsque les valeurs courantes des surfaces avant et arrière sont égales aux valeurs à mesurer. L'optimisation consiste à faire varier par itérations successives les valeurs courantes des surfaces avant et arrière, en partant des valeurs de départ, jusqu'à trouver un extremum de la fonction de mérite.

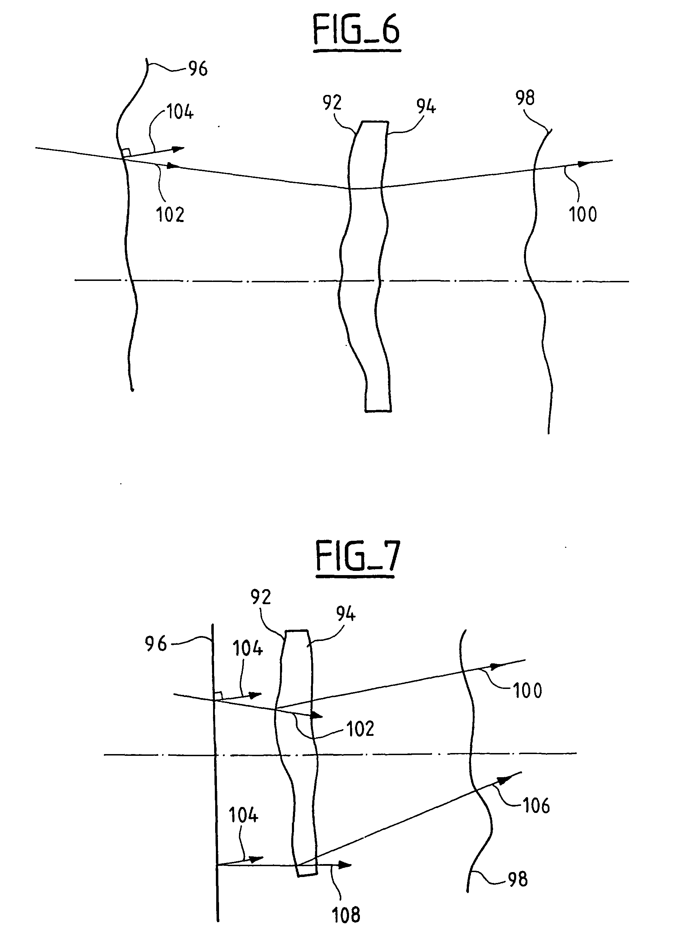

La figure 6 montre un exemple de définition de fonction de mérite pour le calcul des surfaces; l'explication dans le cas de la figure 6 est une explication en termes de fronts d'ondes, pour l'éclairage du composant sur sa surface arrière.

On a représenté sur la figure l'allure du composant optique en reconstruction, autrement dit les valeurs courantes de la surface arrière 92 et de la surface avant 94. On a porté à la figure le front d'onde connu 96 de la lumière incidente sur la surface arrière 92, ainsi que le front d'onde mesuré 98 de la lumière transmise par le composant. La figure montre encore un rayon 100 enregistré après transmission par le composant, dans une des configurations de mesure. Il est possible, connaissant les valeurs courantes de la surface arrière 92 et de la surface avant 94, de calculer dans l'espace du front d'onde incident le rayon incident 102 par propagation inverse à travers le composant optique. On peut ainsi déterminer l'intersection du rayon incident 102 avec le front d'onde incident 96 qui est connu. Au point d'intersection ainsi déterminé, on calcule les différences des cosinus directeurs (x, y, z) du rayon 102 et des cosinus directeurs $(\hat{x}, \hat{y}, \hat{z})$ de la normale 104 au front d'onde. On appelle ici cosinus directeur les coordonnées dans un repère d'un vecteur unitaire colinéaire au rayon ou à la normale.

La fonction de mérite peut alors s'exprimer comme la somme des différences au carré des cosinus directeurs, pour différents rayons, et pour les deux configurations de mesure, c'est-à-dire :

$$\sum_{configurations} \left\{ \sum_{rayons} \left[ (x - \hat{x})^2 + (y - \hat{y})^2 + (z - \hat{z})^2 \right] \right\} \qquad (1)$$

Il est clair que cette définition correspond à une fonction de mérite :

- elle associe un nombre réel à des valeurs courantes des surfaces ;
- la fonction est positive ou nulle ;
- elle s'annule si dans les deux configurations de mesure les rayons calculés par propagation inverse sont identiques aux rayons de la lumière incidente, autrement dit si les valeurs courantes pour les surfaces avant et arrière sont identiques aux surfaces avant et arrière réelles.

Autrement dit, la fonction présente un extremum lorsque les valeurs des surfaces sont égales aux surfaces réelles du composant. La fonction de mérite pourra être constituée par toute fonction qui quantifie les écarts entre le front d'onde courant et le front d'onde de référence.

La figure 7 est similaire à la figure 6 mais montre le cas d'un front d'onde incident de référence qui est plan. Dans ce cas, la normale au front d'onde incident est constante sur toute la surface du composant optique; elle est donc identique pour tout rayon 102, ce qui simplifie les calculs; en effet, il n'est nécessaire de calculer les cosinus directeurs de la normale au front d'onde qu'une seule fois. Dans une telle configuration, il suffit de connaître les cosinus directeurs du rayon 102, à la surface du composant éclairée par la lumière de front d'onde plan, sans avoir à poursuivre la propagation inverse du rayon 102. On a porté sur la figure un deuxième rayon 106 et le rayon construit par propagation inverse 108.

D'autres fonctions de mérite peuvent être utilisées. Dans tous les cas, la fonction de mérite se calcule à partir de la transmission de la lumière dans les deux configurations optiques distinctes mentionnées plus haut. Le fait d'utiliser une fonction de mérite calculée à partir des deux configurations distinctes permet de déterminer simultanément les deux surfaces du composant optique.

L'invention permet de déterminer avec précision les deux surfaces d'un composant optique, après deux mesures en transmission. On donne maintenant un exemple de mise en oeuvre de l'invention, pour la mesure d'un verre progressif. Le verre progressif mesuré était un verre commercialisé par la demanderesse sous la marque Varilux Comfort; la face arrière est sphérique; la face avant est progressive. La lentille présente une base de 7,25 dioptries, une puissance de 5,00 dioptries, un cylindre de prescription nul, une addition de 2,00 dioptries. Dans l'exemple, on a utilisé deux mesures en transmission avec deux lumières de front d'onde incident plan traversant le composant dans des sens opposés. La matrice de micro-lentilles présentait un pas de 2 mm, et la lumière incidente éclairait la lentille sur un diamètre de 50 mm; la distance entre la face arrière du verre et la matrice de capteur était dans chaque direction de la lumière incidente de 12 mm.

Pour l'optimisation, on a utilisé une fonction de mérite du type décrit ci-dessus, avec 845 rayons. Les valeurs de départ utilisées pour les surfaces avant et arrière et l'épaisseur sont les suivantes :

- surface arrière : surface sphérique de 160 mm de rayon ;
- surface avant : surface parabolique arbitraire en $1xr^2$ de diamètre 56 mm ;
- épaisseur du composant 2 mm.

L'optimisation s'effectue par une méthode des moindres carrés, sur 461 variables, c'est-à-dire une modélisation par polynôme de Zernike à 230 variables pour chaque surface, et une variable pour l'épaisseur. En 10 itérations, la fonction de mérite atteint une valeur de $0,1.10^{-14}$.

Les résultats obtenus sont comparés aux résultats d'une mesure mécanique de chaque surface du composant, à l'aide d'une machine de mesure tridimensionnelle, avec une précision meilleure que 1 $\mu$m et un pas de mesure de 2 mm. En chaque point de mesure, et pour chaque surface, la différence entre l'altitude calculée selon l'invention et l'altitude mesurée est inférieure à 1 $\mu$m.

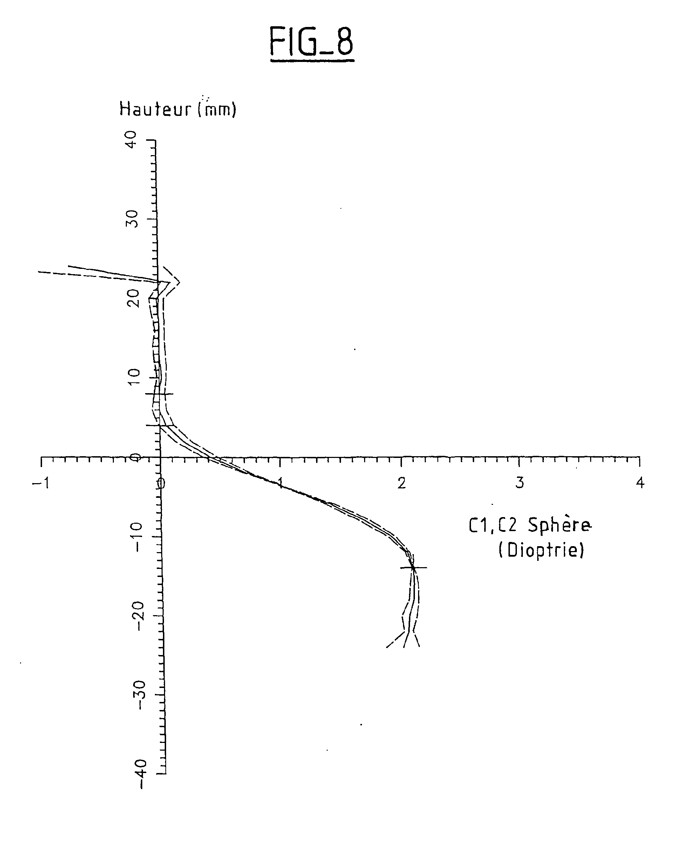

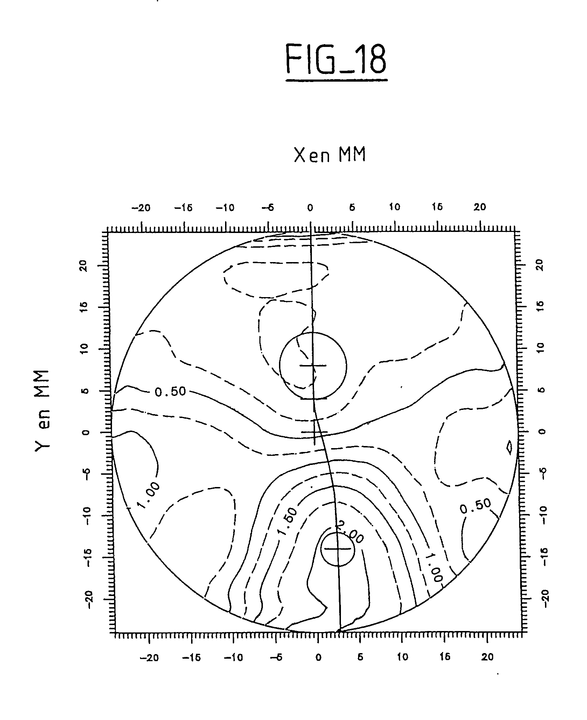

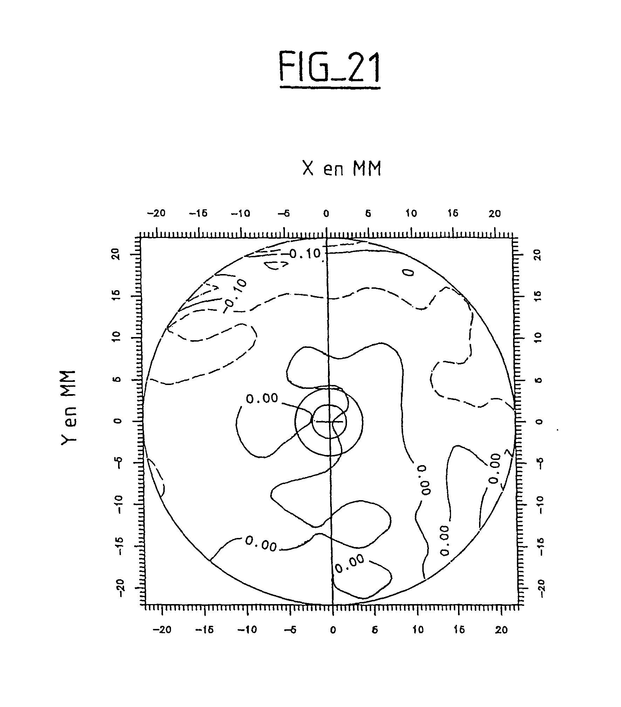

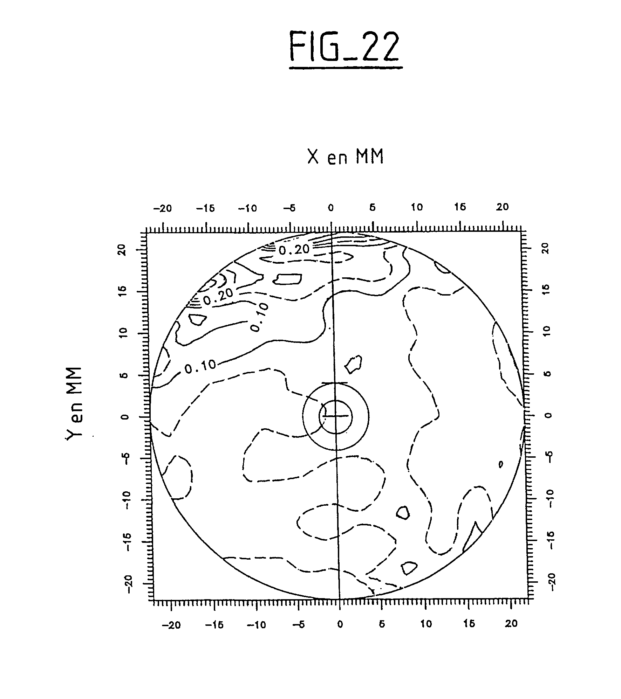

Les figures 8 à 22 montrent les caractéristiques de la lentille dans cet exemple de mise en oeuvre de l'invention. Les figures 8 à 13 montrent les caractéristiques de la lentille, obtenues à partir d'une mesure mécanique de l'invention, et plus précisément :

- figure 8, la sphère moyenne et les courbures maximale et minimale de la méridienne de la face avant du verre ;

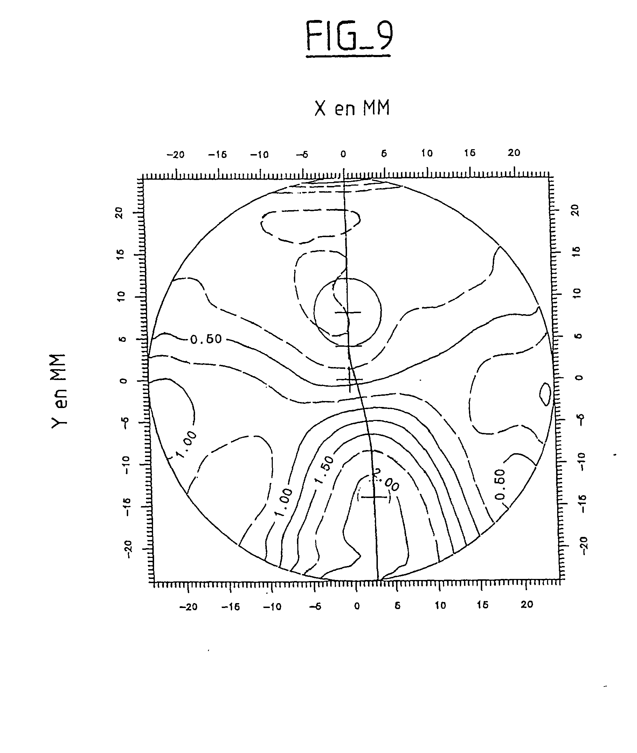

- figure 9, la carte de sphère moyenne de la face avant ;

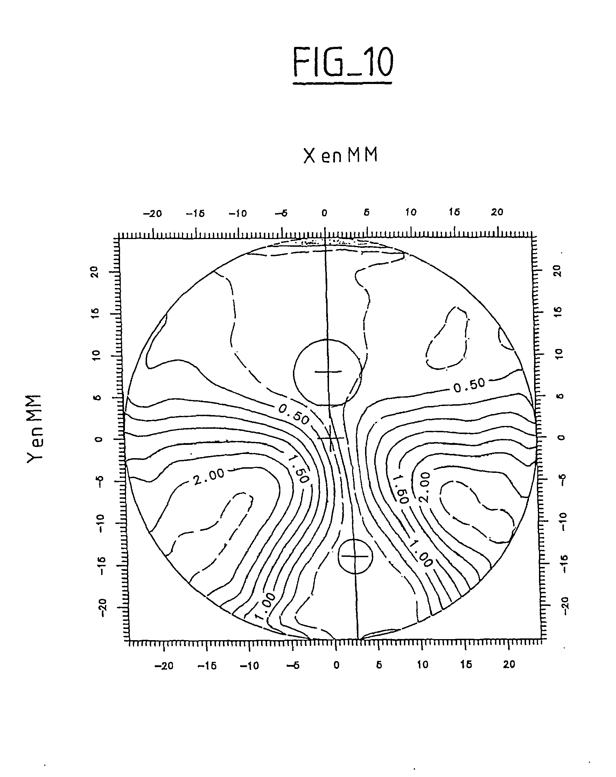

- figure 10, la carte de cylindre de la face avant ;

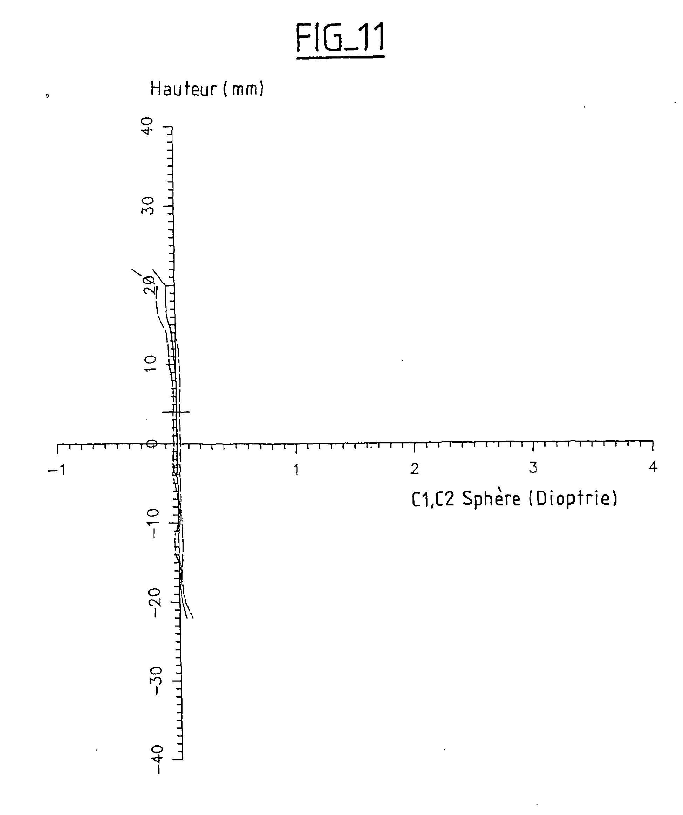

- figure 11, la sphère moyenne et les courbures maximale et minimale de la méridienne de la face arrière du verre ;

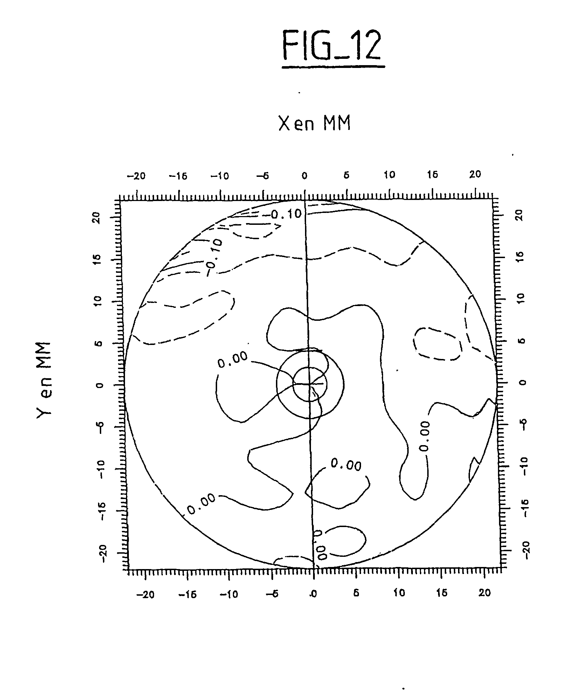

- figure 12, la carte de sphère moyenne de la face arrière ;

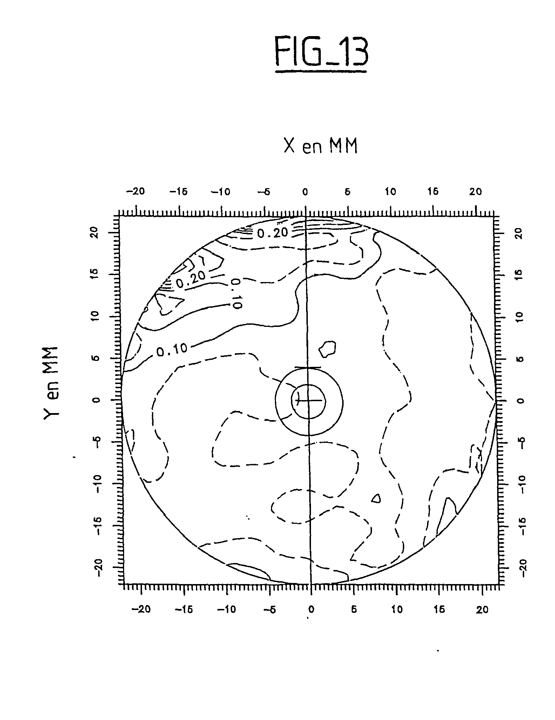

- figure 13, la carte de cylindre de la face arrière.

Pour les figures 8 et 11, la méridienne est définie par trois segments, comme expliqué dans les brevets FR-A-2 683 642 et FR-A-2 683 643 de la demanderesse.

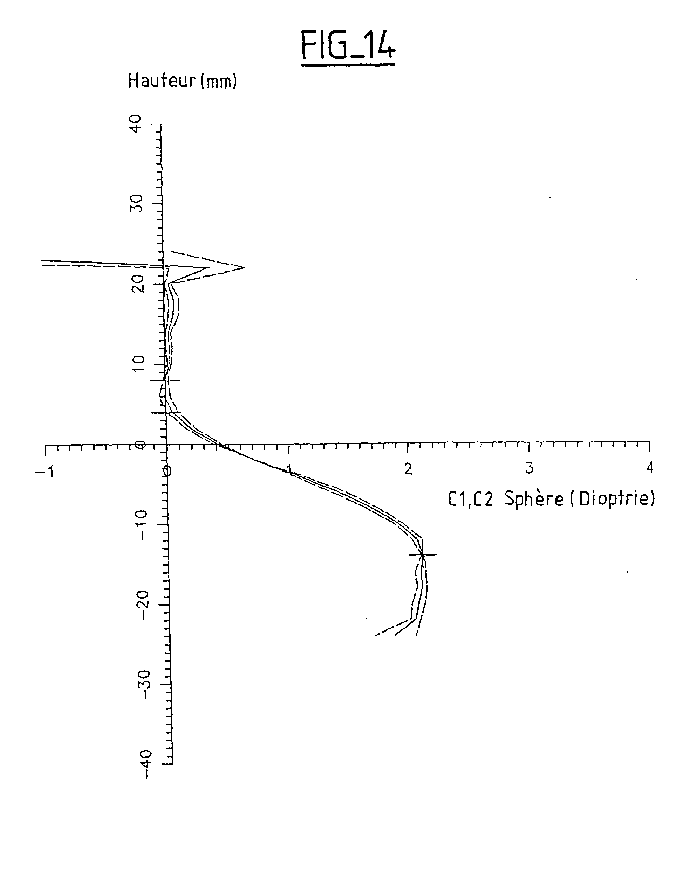

Les figures 14 à 16 montrent les résultats d'une reconstruction selon l'état de la technique, ce qui correspondrait en pratique aux résultats obtenus avec le procédé décrit dans les demandes FR-A-2 710 162 ou EP-A-0 644 411 de la demanderesse, en supposant que la face arrière est parfaitement sphérique, et présente un rayon de 164,38 mm. Les figures montrent :

- figure 14, la sphère moyenne et les courbures maximale et minimale de la méridienne de la face avant du verre ;

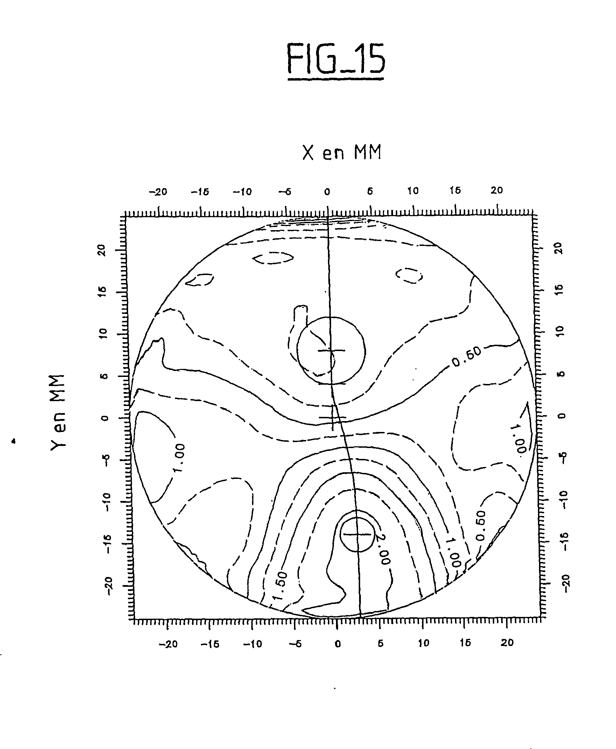

- figure 15, la carte de sphère moyenne de la face avant ;

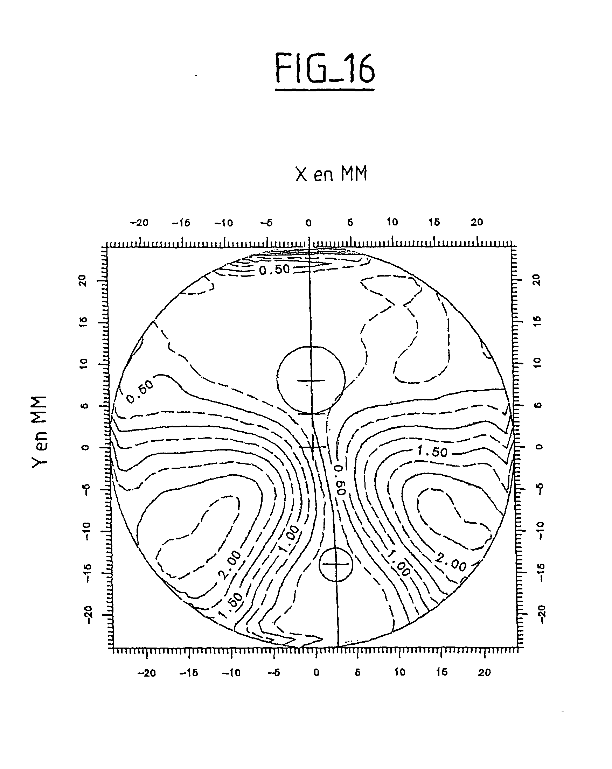

- figure 16, la carte de cylindre de la face avant ;

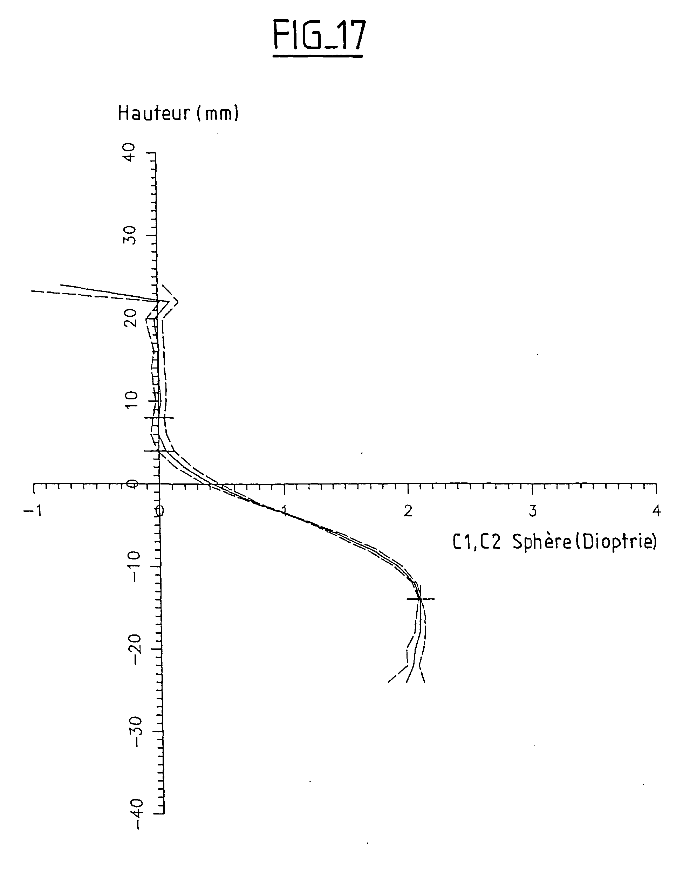

Les figures 17 à 22 sont similaires aux figures 8 à 13, mais montrent les résultats obtenus par le procédé de l'invention. On constate une très grande similitude entre les figures respectives. Notamment, on retrouve grâce à l'invention les défauts de la face arrière du composant, qui en consigne, est parfaitement sphérique.

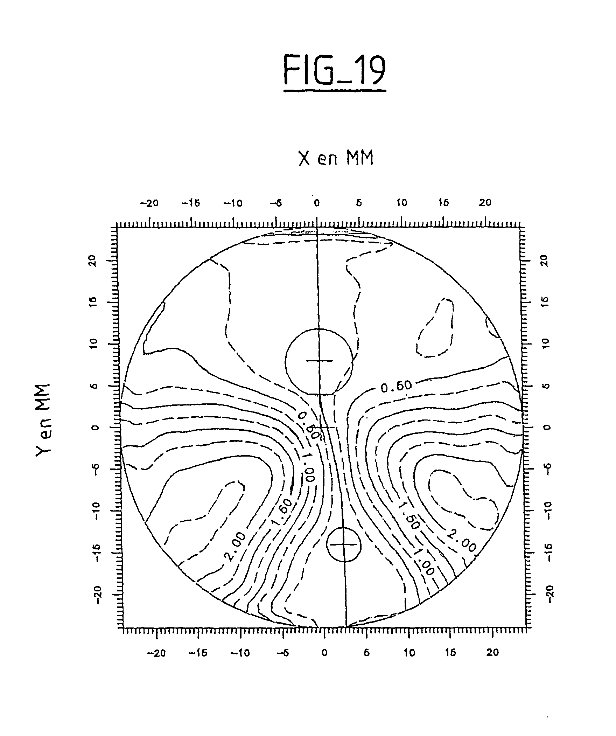

Par comparaison, les figures 10 et 19 sont assez différentes de la figure 16, notamment en ce qui concerne la partie supérieure de la lentille, qui correspond à la zone de vision de loin. En d'autres termes, on obtient sensiblement les mêmes résultats grâce à l'invention que dans une mesure mécanique; mais ces résultats sont différents de ceux obtenus en supposant que la face arrière de la lentille est parfaitement sphérique. L'invention, par rapport à la solution de l'état de la technique, permet d'éviter de reporter sur la face avant de la lentille les défauts de la face arrière, quand celle-ci n'est pas exactement identique à sa valeur de consigne.

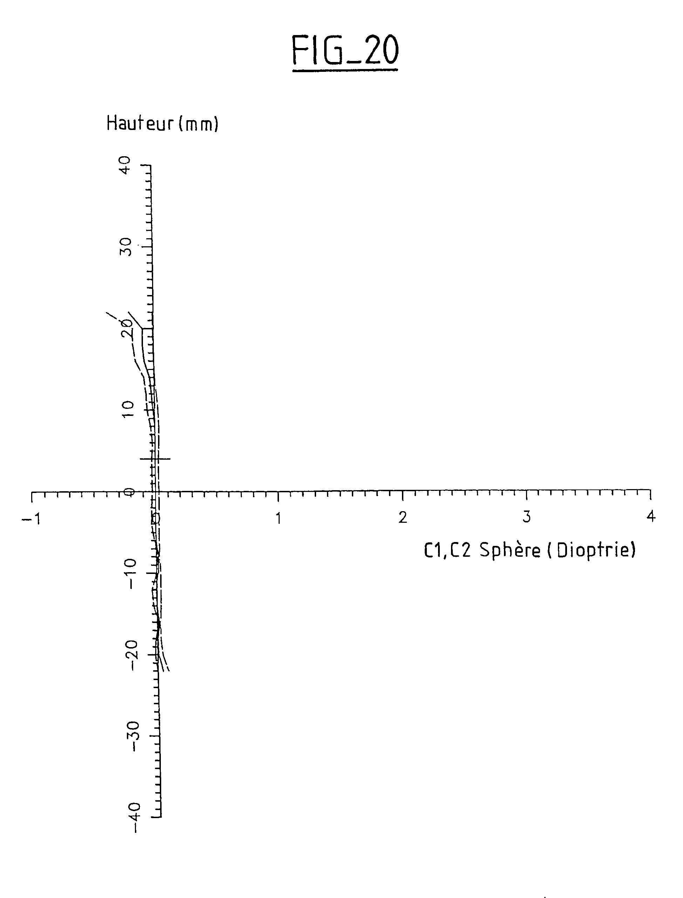

De même, la méridienne représentée à la figure 20 correspond bien à la méridienne mesurée représentée à la figure 11. Dans ce cas, les écarts par rapport à la surface arrière, supposée sphérique, sont faibles.

Bien entendu, la présente invention n'est pas limitée aux modes de réalisations décrits à titre d'exemple; ainsi, on peut utiliser pour déterminer le front d'onde de la lumière transmise d'autres méthodes que la déflectométrie de Hartmann, et par exemple, une méthode de déflectométrie par franges comme dans FR-A-2 710 162 ou WO-A-9705467 utilisant un réseau de Ronchi. On peut aussi utiliser des méthodes interférométriques. Le procédé de l'invention n'est pas limité à la mise en évidence de faibles écarts; l'invention permet de déterminer les corrections apportées par chacune des deux surfaces sans hypothèses préalables sur ces deux surfaces.

Dans le montage de la figure 1 comme dans celui de la figure 2, on peut utiliser d'autres moyens pour générer des lumières avec des fronts d'onde distincts; dans le mode de réalisation de la figure 1, on pourrait changer la lentille de collimation 10, ou ajouter une lentille supplémentaire. On pourrait dans le mode de réalisation de la figure 2 utiliser une source unique, et faire tourner le composant. On pourrait aussi mélanger les modes de réalisation, et utiliser une source de lumière à front d'onde plan et une source de lumière à front d'onde sphérique dans le mode de réalisation de la figure 2. Ceci s'applique aussi aux figures 3 à 5.

Si l'épaisseur du composant au centre ou en un point est connue, on peut se dispenser des moyens de mesure de cette épaisseur; alternativement, tous les moyens connus de détermination du prisme ou de l'épaisseur du composant peuvent être utilisés.

Dans les exemples données plus haut, on a proposé d'utiliser deux séries de mesure pour déterminer les caractéristiques des deux surfaces des deux lentilles. Il est aussi possible de procéder à plus de deux séries de mesures, toujours dans des configurations en transmission. Comme expliqué plus haut, on utilise des configurations distinctes, c'est-à-dire des fronts d'ondes incidents et transmis différents.

Procéder à plus de deux mesures peut notamment être utile pour déterminer par optimisation d'autres caractéristiques du composant optique. Par exemple, pour un composant optique d'indice variable, on pourrait à l'aide de trois séries de mesures déterminer les surfaces du composant optique et la répartition d'indice. Il est aussi connu de constituer des composants optiques à partir de deux galettes présentant une face plane et une face non-plane, qui sont assemblées par leur face plane. Pour un tel composant, l'invention permet de déterminer non seulement les surfaces et l'épaisseur du composant, mais aussi la position de l'interface entre les deux galettes.

Dans chacun des cas, il est avantageux que la lumière incidente éclaire l'ensemble de la surface utile du composant optique, c'est-à-dire la partie du composant dont on recherche les caractéristiques.

**Revendications**

1. Procédé de mesure en transmission de la structure géométrique d'un composant optique (2), comprenant les étapes :

   - d'éclairage du composant optique par une première lumière incidente (8, 10), dont le front d'onde est connu,
   - de mesure (16, 18) du front d'onde de ladite première lumière après transmission par ledit composant optique,
   - d'éclairage du composant optique par une deuxième lumière incidente (12, 14), dont le front d'onde est connu,
   - de mesure (16, 18) du front d'onde de ladite deuxième lumière après transmission par ledit composant optique,
   - de calcul de la structure géométrique dudit composant optique à partir des fronts d'ondes mesurés lors desdites étapes de mesure.

2. Le procédé de la revendication 1, **caractérisé en ce qu'**aux différentes étapes de mesure, les fronts d'onde du côté de la même surface du composant sont différents.

3. Le procédé de la revendication 1 ou 2, **caractérisé en ce que** l'étape de mesure s'effectue par déflectométrie de Hartmann ou Shack-Hartmann.

4. Le procédé de la revendication 1 ou 2, **caractérisé en ce que** l'étape de mesure s'effectue par déflectométrie à franges.

5. Le procédé de la revendication 1 ou 2, **caractérisé en ce que** l'étape de mesure est une étape de mesure par interférométrie.

6. Le procédé de l'une des revendications 1 à 5, **caractérisé en ce que** les étapes d'éclairage comprennent l'éclairage du composant sur une de ses surfaces, et l'éclairage du composant sur l'autre de ses surfaces

7. Le procédé de la revendication 6, **caractérisé en ce que** les première et seconde lumières présentent des fronts d'onde identiques.

8. Le procédé de la revendication 7, **caractérisé en ce que** les étapes d'éclairages comprennent l'éclairage du composant optique par une même lumière incidente, et **en ce que** le procédé comprend une étape de retournement du composant optique.

9. Le procédé de l'une des revendications 1 à 5, **caractérisé en ce que** les étapes d'éclairage comprennent l'éclairage du composant sur une seule de ses surfaces.

10. Le procédé de la revendication 9, **caractérisé en ce que** les première et seconde lumières présentent des fronts d'onde distincts.

11. Le procédé de l'une des revendications précédentes, **caractérisé en ce que** l'étape de calcul s'effectue par optimisation d'une fonction de mérite calculée à partir d'au moins deux étapes de mesure.

12. Le procédé de l'une des revendications précédentes, **caractérisé par** une étape de mesure de l'épaisseur du composant en au moins un point.

13. Le procédé de l'une des revendications précédentes, **caractérisé par** des étapes :

    - d'éclairage du composant optique par une troisième lumière incidente, dont le front d'onde est connu,
    - de mesure du front d'onde de ladite troisième lumière après transmission par ledit composant optique.

14. Un appareil de mesure en transmission de la structure géométrique d'un composant optique (2), comprenant :

    - des moyens (8, 10) d'éclairage du composant optique par une première lumière incidente, dont le front d'onde est connu,
    - des moyens de mesure (16, 18) du front d'onde de ladite première lumière après transmission par ledit composant optique,
    - des moyens d'éclairage (12, 14) du composant optique par une deuxième lumière incidente, dont le front d'onde est connu, et distinct
    - des moyens de mesure (16, 18) du front d'onde de ladite deuxième lumière après transmission par ledit composant optique,
    - des moyens de calcul de la structure géométrique dudit composant optique à partir des fronts d'ondes mesurés lors desdites étapes de mesure.

15. L'appareil de la revendication 14, **caractérisé en ce que** les moyens de mesure comprennent une matrice de micro-lentilles (16).

16. L'appareil de la revendication 14, **caractérisé en ce que** les moyens de mesure comprennent un réseau.

17. L'appareil de la revendication 14, 15 ou 16, **caractérisé en ce que** les moyens d'éclairage du composant optique par une première lumière incidente, et les moyens d'éclairage du composant optique par une deuxième lumière incidente éclairent respectivement le composant sur chacune de ses surfaces.

18. L'appareil de la revendication 17, **caractérisé en ce que** les première et seconde lumières présentent des fronts d'onde identiques.

19. L'appareil de la revendication 14, 15 ou 16, **caractérisé en ce que** les moyens d'éclairage du composant optique par une première lumière incidente et les moyens d'éclairage du composant optique par une deuxième lumière incidente éclairent la même surface du composant.

20. L'appareil de la revendication 19, **caractérisé en ce que** les première et seconde lumières présentent des fronts d'onde distincts.

21. L'appareil de l'une des revendications 14 à 20, **caractérisé par** des moyens de mesure de l'épaisseur du composant.

22. L'appareil de l'une des revendications 14 à 21, **caractérisé par**

    - des moyens d'éclairage du composant optique par une troisième lumière incidente, dont le front d'onde est connu,
    - des moyens de mesure du front d'onde de ladite troisième lumière après transmission par ledit composant optique.

23. L'appareil de l'une des revendications 14 à 22, **caractérisé par** des moyens (68, 70) de visualisation de micro-gravures sur le composant.

**Claims**

1. A method for measuring the geometrical structure of an optical component (2) in transmission, comprising the steps:

   - of illuminating the optical component by means of a first incident beam (8, 10), the wavefront of which is known,
   - of measuring (16, 18) the wavefront of said first beam after transmission by said optical component,
   - of illuminating the optical component by a second incident beam (12, 14), the wavefront of which is known,
   - of measuring (16, 18) the wavefront of said second beam after transmission by said optical component,
   - of calculating the geometrical structure of said optical component from the wavefronts measured during said measurement steps.

2. The method of claim 1, **characterized in that**, at the various measurement steps, the wavefronts on the side facing the same surface of the component are different.

3. The method of claim 1 or 2, **characterized in that** the measurement step is carried out by Hartmann or Shack-Hartmann deflectometry.

4. The method of claim 1 or 2, **characterized in that** the measurement step is carried out by fringe deflectometry.

5. The method of claim 1 or 2, **characterized in that** the measurement step is a step of measuring by interferometry.

6. The method of one of claims 1 to 5, **characterized in that** the illumination steps comprise illuminating the component on one of its surfaces, and illuminating the component on the other of its surfaces.

7. The method of claim 6, **characterized in that** the first and second beams have identical wavefronts.

8. The method of claim 7, **characterized in that** the illumination steps comprise illuminating the optical component by the same incident beam, and **in that** the method comprises a step of turning the optical component around.

9. The method of one of claims 1 to 5, **characterized in that** the illumination steps comprise illuminating the component on only one of its surfaces.

10. The method of claim 9, **characterized in that** the first and second beams have different wavefronts.

11. The method of one of the preceding claims, **characterized in that** the calculation step is carried out by optimizing a merit function calculated from at least two measurement steps.

12. The method of one of the preceding claims, **characterized by** a step of measuring the thickness of the component at least one point.

13. The method of one of the preceding claims, **characterized by** steps:

   - of illuminating the optical component by a third incident beam, the wavefront of which is known,
   - of measuring the wavefront of said third beam after transmission by said optical component.

14. An apparatus for measuring the geometrical structure of an optical component (2) in transmission, comprising:

   - means (8, 10) of illuminating the optical component by means of a first incident beam, the wavefront of which is known,
   - means of measuring (16, 18) the wavefront of said first beam after transmission by said optical component,
   - means (12, 14) of illuminating the optical component by a second incident beam , the wavefront of which is known, and different
   - means of measuring (16, 18) the wavefront of said second beam after transmission by said optical component,
   - means of calculating the geometrical structure of said optical component from the wavefronts measured during said measurement steps.

**15.** The apparatus of claim 14, **characterized in that** the measurement means comprise a microlens matrix (16).

**16.** The apparatus of claim 14, **characterized in that** the measurement means comprise an array.

**17.** The apparatus of claim 14, 15 or 16, **characterized in that** the means of illuminating the optical component by a first incident beam and the means of illuminating the optical component by a second incident beam illuminate the component respectively on each of its surfaces.

**18.** The apparatus of claim 17, **characterized in that** the first and second beams have identical wavefronts.

**19.** The apparatus of claim 14, 15, or 16, **characterized in that** the means of illuminating the optical component by a first incident beam and the means of illuminating the optical component by a second incident beam illuminate the same surface of the component.

**20.** The apparatus of claim 19, **characterized in that** the first and second beams have different wavefronts.

**21.** The apparatus of one of claims 14 to 20, **characterized by** means of measuring the thickness of the component.

**22.** The apparatus of one of claims 14 to 21, **characterized by**

- means of illuminating the optical component by a third incident beam, the wavefront of which is known,
- means of measuring the wavefront of said third beam after transmission by said optical component.

**23.** The apparatus of one of claims 14 to 22, **characterized by** means (68, 70) of displaying microetching on the component.


**Patentansprüche**

**1.** Verfahren zum Messen beim Übertragen der geometrischen Struktur eines optischen Bauteils (2) mit den folgenden Schritten:

- Beleuchten des optischen Bauteils durch ein erstes einfallendes Licht (8, 10), dessen Wellenfront bekannt ist,
- Messen (16, 18) der Wellenfront des ersten Lichts nach Übertragen durch den optischen Bauteil,
- Beleuchten des optischen Bauteils durch ein zweites einfallendes Licht (12, 14), dessen Wellenfront bekannt ist,
- Messen (16, 18) der Wellenfront des zweiten Lichts nach Übertragen durch den optischen Bauteil,
- Berechnen der geometrischen Struktur des optischen Bauteils ausgehend von den bei den Messschritten gemessenen Wellenfronten.

**2.** Verfahren nach Anspruch 1, **dadurch gekennzeichnet, dass** die Wellenfronten auf der Seite der gleichen Fläche des Bauteils bei den verschiedenen Messschritten unterschiedlich sind.

**3.** Verfahren nach Anspruch 1 oder 2, **dadurch gekennzeichnet, dass** der Messschritt durch Hartmann- oder Shack-Hartmann-Deflektometrie ausgeführt wird.

**4.** Verfahren nach Anspruch 1 oder 2, **dadurch gekennzeichnet, dass** der Messschritt durch Randdeflektometrie ausgeführt wird.

**5.** Verfahren nach Anspruch 1 oder 2, **dadurch gekennzeichnet, dass** der Messschritt ein Messschritt durch Interferometrie ist.

**6.** Verfahren nach einem der Ansprüche 1 bis 5, **dadurch gekennzeichnet, dass** die Beleuchtungsschritte das Beleuchten des Bauteils auf einer seiner Flächen und das Beleuchten des Bauteils auf der anderen seiner Flächen aufweisen.

**7.** Verfahren nach Anspruch 6, **dadurch gekennzeichnet, dass** das erste und das zweite Licht identische Wellenfronten aufweisen.

8. Verfahren nach Anspruch 7, **dadurch gekennzeichnet, dass** die Beleuchtungsschritte das Beleuchten des optischen Bauteils durch ein gleiches einfallendes Licht aufweisen, und dass das Verfahren einen Umdrehschritt des optischen Bauteils aufweist.

9. Verfahren nach einem der Ansprüche 1 bis 5, **dadurch gekennzeichnet, dass** die Beleuchtungsschritte das Beleuchten des Bauteils auf einer seiner Flächen aufweisen.

10. Verfahren nach Anspruch 9, **dadurch gekennzeichnet, dass** das erste und das zweite Licht unterschiedliche Wellenfronten aufweisen.

11. Verfahren nach einem der vorhergehenden Ansprüche, **dadurch gekennzeichnet, dass** der Berechnungsschritt durch Optimieren einer Leistungsfunktion erfolgt, die ausgehend von mindestens zwei Messschritten berechnet wird.

12. Verfahren nach einem der vorhergehenden Ansprüche, **gekennzeichnet durch** einen Schritt des Messens der Stärke des Bauteils in mindestens einem Punkt.

13. Verfahren nach einem der vorhergehenden Ansprüche, **gekennzeichnet durch** die folgenden Schritte:

   - Beleuchten des optischen Bauteils **durch** ein drittes einfallendes Licht, dessen Wellenfront bekannt ist,
   - Messen der Wellenfront des dritten Lichts nach Übertragen **durch** den optischen Bauteil.

14. Gerät zum Messen beim Übertragen der geometrischen Struktur eines optischen Bauteils (2), umfassend:

   - Mittel (8, 10) zum Beleuchten des optischen Bauteils durch ein erstes einfallendes Licht, dessen Wellenfront bekannt ist,
   - Mittel zum Messen (16, 18) der Wellenfront des ersten Lichts nach dem Übertragen durch den optischen Bauteil,
   - Mittel zum Beleuchten (12, 14) des optischen Bauteils durch ein zweites einfallendes Licht, dessen Wellenfront bekannt und unterschiedlich ist,
   - Mittel zum Messen (16, 18) der Wellenfront des zweiten Lichts nach dem Übertragen durch den optischen Bauteil,
   - Mittel zum Berechnen der geometrischen Struktur des optischen Bauteils ausgehend von Wellenfronten, die bei den Messschritten gemessen wurden.

15. Gerät nach Anspruch 14, **dadurch gekennzeichnet, dass** die Messmittel eine Mikronlinsen-Matrix (16) aufweisen.

16. Gerät nach Anspruch 14, **dadurch gekennzeichnet, dass** die Messmittel ein Gitter aufweisen.

17. Gerät des Anspruchs 14, 15 oder 16, **dadurch gekennzeichnet, dass** die Mittel zum Beleuchten des optischen Bauteils durch ein erstes einfallendes Licht und die Mittel zum Beleuchten des optischen Bauteils durch ein zweites einfallendes Licht jeweils den Bauteil auf einer seiner Flächen beleuchten.

18. Gerät nach Anspruch 17, **dadurch gekennzeichnet, dass** das erste und das zweite Licht identische Wellenfronten aufweisen.

19. Gerät nach Anspruch 14, 15 oder 16, **dadurch gekennzeichnet, dass** die Mittel zum Beleuchten des optischen Bauteils durch ein erstes einfallendes Licht und die Mittel zum Beleuchten des optischen Bauteils durch ein zweites einfallendes Licht die gleiche Fläche des Bauteils beleuchten.

20. Gerät nach Anspruch 19, **dadurch gekennzeichnet, dass** das erste und das zweite Licht unterschiedliche Wellenfronten aufweisen.

21. Gerät nach einem der Ansprüche 14 bis 20, **gekennzeichnet durch** Mittel zum Messen der Stärke des Bauteils.

22. Gerät nach einem der Ansprüche 14 bis 21, **gekennzeichnet durch**

   - Mittel zum Beleuchten des optischen Bauteils **durch** ein drittes einfallendes Licht, dessen Wellenfront bekannt ist,
   - Mittel zum Messen der Wellenfront des dritten Lichts nach dem Übertragen durch den optischen Bauteil.

**23.** Gerät nach einem der Ansprüche 14 bis 22, **gekennzeichnet durch** Mittel (68, 70) zum Anzeigen von Mikrogravuren auf dem Bauteil.

## FIG_1

## FIG_2

# FIG_3

# FIG_4

FIG_5

## FIG_6

## FIG_7

# FIG_8

Hauteur (mm)

C1,C2 Sphère
(Dioptrie)

# FIG_9

X en MM

Y en MM

# FIG_10

# FIG_11

Hauteur (mm)

C1,C2 Sphère (Dioptrie)

# FIG_12

X en MM

Y en MM

# FIG_13

# FIG_14

Hauteur (mm)

C1,C2 Sphère (Dioptrie)

# FIG_15

# FIG_16

# FIG_17

Hauteur (mm)

C1,C2 Sphère (Dioptrie)

# FIG_18

Xen MM

# FIG_19

# FIG_20

Hauteur (mm)

C1,C2 Sphère (Dioptrie)

# FIG_21

X en MM

Y en MM

# FIG_22

X en MM

## EP 1 224 448 B1

**Documents brevets cités dans la description**

- FR 2710162 A
- EP 0644411 A
- WO 9705467 A
- US 5825476 A
- FR 2683642 A
- FR 2683643 A